# EUROPEAN PATENT APPLICATION

(11) **EP 3 570 309 A1**
(43) Date of publication of application: **20.11.2019**
(21) Application number: 17891373.7
(22) Date of filing: 30.11.2017
(51) Int. Cl.: H01H 47/00, H01H 33/59

(54) **ARC-SUPPRESSING DEVICE**

(30) Priority: 13.01.2017 JP 2017003765
(71) Applicant: Sony Corporation, Tokyo 108-0075 (JP)
(72) Inventor: MORITA, Tadashi, Tokyo 141-0022 (JP)
(74) Representative: 2SPL Patentanwälte PartG mbB
(86) International application number: PCT/JP2017/042932
(87) International publication number: WO 2018/131307

(57) **Abstract**

To provide an arc suppression device that blocks AC power and is capable of prolonging a life of a breaker for switching between supply and block of the AC power from an AC power supply.

An arc suppression device includes current limiting circuits provided in parallel to a breaker for switching between supply and block of AC power from an AC power supply corresponding to a bidirectional current from the AC power supply in parallel, in which each of the current limiting circuits blocks a current from the AC power supply when the AC power from the AC power supply is supplied to a load and blocks the current from the AC power supply after a current that is generated by a potential difference is flowed, the potential difference being caused at the time of blocking when the supply of the AC power from the AC power supply to the load is blocked.

## Description

### TECHNICAL FIELD

The present disclosure relates to an arc suppression device.

### BACKGROUND ART

In both DC power supply and AC power supply, arc discharge is generated at the time of cutting off power. In a case of alternating current, since there is a moment when a voltage becomes zero at each predetermined time (for example, every 10 milliseconds), the arc discharge naturally stops at least within the predetermined time (for example, within 10 milliseconds). However, even in a case of the AC power supply, it is desirable not to generate the arc discharge, and technology for suppressing the generation of the arc at the time of blocking AC power has been disclosed (for example, refer to Patent Document 1).

### CITATION LIST

### PATENT DOCUMENT

Patent Document 1: Japanese Patent Application Laid-Open No. 2013-008607

### SUMMARY OF THE INVENTION

### PROBLEMS TO BE SOLVED BY THE INVENTION

At the time when a contact of a block circuit used for blocking the alternating current is separated, if a contact voltage and current are equal to or more than a certain value at that moment, arc is generated. The arc deteriorates the contact, and shortens the life of the blocking circuit.

Therefore, in the present disclosure, a novel and improved arc suppression device, for blocking AC power, capable of prolonging a life of a breaker for switching supply and block of the AC power from an AC power supply is proposed.

### SOLUTIONS TO PROBLEMS

According to the present disclosure, an arc suppression device is provided that includes current limiting circuits provided in parallel to a breaker for switching between supply and block of AC power from an AC power supply corresponding to a bidirectional current from the AC power supply in parallel, in which each of the current limiting circuits blocks a current from the AC power supply when the AC power from the AC power supply is supplied to a load and blocks the current from the AC power supply after a current that is generated by a potential difference is flowed, the potential difference being caused at the time of blocking when the supply of the AC power from the AC power supply to the load is blocked.

Furthermore, according to the present disclosure, an arc suppression device is provided that includes current limiting circuits provided in parallel to a breaker for switching between supply and block of AC power from an AC power supply corresponding to a bidirectional current from the AC power supply in parallel, in which each of the current limiting circuits includes a switching element that is turned off when the AC power from the AC power supply is supplied to the load and is turned on due to a potential difference caused at the time of blocking when the supply of the AC power from the AC power supply to the load is blocked, and thereafter, is turned off after a current that is generated by the potential difference is flowed and a capacitive element that raises a gate voltage of the switching element when the supply of the AC power from the AC power supply to the load is blocked.

Furthermore, according to the present disclosure, an arc suppression device is provided that includes current limiting circuits provided in parallel to a breaker for switching between supply and block of AC power from an AC power supply corresponding to a bidirectional current from the AC power supply in series, in which each of the current limiting circuits blocks a current from the AC power supply when the AC power from the AC power supply is supplied to a load and blocks the current from the AC power supply after a current that is generated by a potential difference is flowed, the potential difference being caused at the time of blocking when the supply of the AC power from the AC power supply to the load is blocked.

Furthermore, according to the present disclosure, an arc suppression device is provided that includes current limiting circuits provided in parallel to a breaker for switching between supply and block of AC power from an AC power supply corresponding to a bidirectional current from the AC power supply in series, in which each of the current limiting circuits includes a switching element that is turned off when the AC power from the AC power supply is supplied to the load and is turned on due to a potential difference caused at the time of blocking when the supply of the AC power from the AC power supply to the load is blocked, and thereafter, is turned off after a current that is generated by the potential difference is flowed and a capacitive element that raises a gate voltage of the switching element when the supply of the AC power from the AC power supply to the load is blocked.

### EFFECTS OF THE INVENTION

As described above, in the present disclosure, it is possible to provide a novel and improved arc suppression device, for blocking AC power, capable of prolonging a life of a breaker for switching supply and block of the AC power from an AC power supply.

Note that the above effects are not necessarily limited, and any effect that has been described herein or other effect found from the specification may be obtained together with or instead of the above effects.

### BRIEF DESCRIPTION OF DRAWINGS

Fig. 1 is an explanatory diagram illustrating an example of a circuit configuration of an arc suppression device according to one embodiment of the present disclosure.
Fig. 2 is an explanatory diagram illustrating temporal transitions of a current and a voltage in an arc suppression device 100.
Fig. 3 is an explanatory view illustrating an example of a circuit configuration of the arc suppression device according to the embodiment.
Fig. 4 is an explanatory view illustrating an example of a circuit configuration of the arc suppression device according to the embodiment.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted with the same reference numeral so as to omit redundant description.

Note that the description will be made in the following order.
1. Embodiment of the Present Disclosure
   1.1. Background
   1.2. Exemplary Configuration
2. Summary

### <1. One Embodiment of the Present Disclosure>

### [1.1. Background]

Before describing an embodiment of the present disclosure in detail, the background of the embodiment of the present disclosure will be described first.

In both DC power supply and AC power supply, at the time of cutting off the power, when a voltage and a current exceed or are set to a predetermined value, sparks and arc discharges are generated due to a potential difference between electrodes. In a case of alternating current, since there is a moment when a voltage becomes zero at each predetermined time (for example, every 10 milliseconds), the arc discharge naturally stops at least within the predetermined time (for example, within 10 milliseconds).

However, at the time when a contact of a block circuit used for blocking the alternating current is separated, if a contact voltage and current at that moment are equal to or more than a certain value, arc is generated. The arc deteriorates the contact, and shortens a life of the blocking circuit. There is a method for blocking at a zero crossing point of alternating current by using a thyristor of a semiconductor and the like. However, while current is conducted, heat is generated by an internal resistor in the semiconductor, and miniaturization cannot be performed, and the current is blocked by using the zero crossing point of the alternating current. Therefore, the current cannot be blocked until the current reaches the zero crossing point.

Therefore, in consideration of the above, the discloser of this case has carefully studied about an arc suppression device that can suppress generation of arc at the time when a contact is separated when the alternating current is blocked and prolong a life by preventing deterioration of the contact. As a result, in the following description, the discloser of this case has devised an arc suppression device that can suppress generation of arc when a contact is separated at the time of blocking an alternating current and prolong a life by preventing deterioration of the contact.

In the above, the background of one embodiment of the present disclosure has been described. Subsequently, an embodiment of the present disclosure will be described in detail.

### [1.2. Exemplary Configuration]

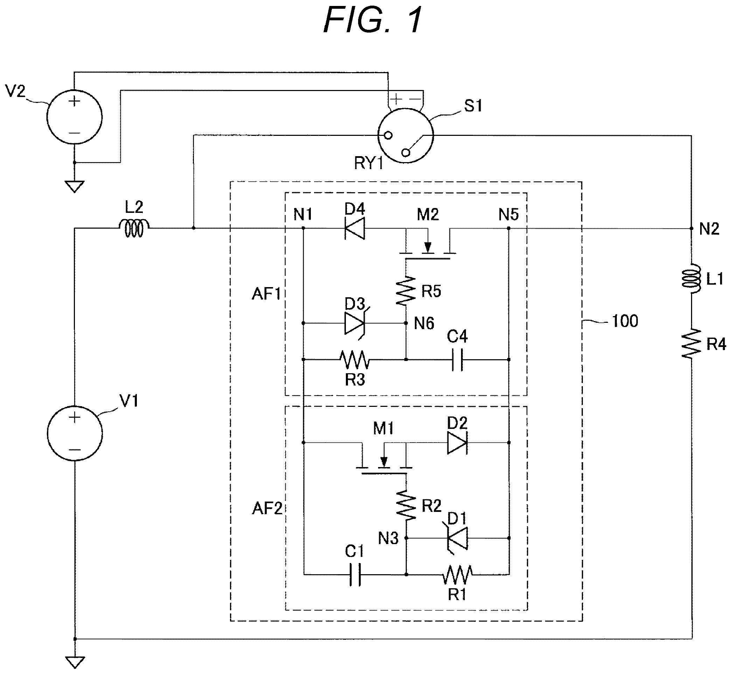

Fig. 1 is an explanatory diagram illustrating an example of a circuit configuration of an arc suppression device according to one embodiment of the present disclosure. The arc suppression device illustrated in Fig. 1 is a device which suppresses arc that may occur at the time of blocking AC power. Hereinafter, the example of the circuit configuration of the arc suppression device according to one embodiment of the present disclosure will be described with reference to Fig. 1.

An arc suppression device 100 illustrated in Fig. 1 is a device which suppresses generation of arc in a relay RY1 when AC power supplied from an AC power supply V1 is blocked by the relay RY1. The AC power supply V1 is, for example, a power supply for supplying AC power of 100 V. Furthermore, on/off of the relay RY1 is switched by power from a DC power supply V2. As illustrated in Fig. 1, the arc suppression device 100 is provided in parallel to the relay RY1. Furthermore, the arc suppression device 100 includes current limiting circuits AF1 and AF2 provided in parallel.

The current limiting circuit AF1 includes a Metal-Oxide-Semiconductor Field-Effect Transistor (MOSFET) M2, a Zener diode D3, a diode D4, resistors R3 and R5, and a capacitor C4. The current limiting circuit AF2 includes a MOSFET M1, a Zener diode D1, a diode D2, resistors R1 and R2, and a capacitor C4.

The current limiting circuit AF1 is a circuit which suppresses generation of the arc in the relay RY1 when the relay RY1 blocks the current in a state where the AC power supply V1 has a negative voltage. The current limiting circuit AF2 is a circuit which suppresses generation of the arc in the relay RY1 when the relay RY1 blocks the current in a state where the AC power supply V1 has a positive voltage.

First, each element included in the current limiting circuit AF1 will be described. As the MOSFET M2, an n-type MOSFET is used in the present embodiment. The MOSFET M2 is provided on a path through which the current flows from the AC power supply V1. The capacitor C4 is provided between a drain terminal and a gate terminal of the MOSFET M2. Furthermore, the resistor R3 is provided between the gate terminal and a source terminal of the MOSFET M2. The resistor R3 is provided to set a time for applying a voltage to the gate terminal of the MOSFET M2 together with the capacitor C4. Then, the capacitor C4 and the resistor R3 are connected in series. The Zener diode D3 is provided to discharge charges stored in the capacitor C4 when a contact of the relay RY1 is connected. Furthermore, the Zener diode D3 is provided to protect the gate terminal of the MOSFET M2. The diode D4 suppresses a current caused by a parasitic reverse diode of the MOSFET M2. The current limiting circuit AF1 is reversely biased by the diode D4 when the current is blocked by the relay RY1 in a state where the AC power supply V1 has the positive voltage and is disconnected from the arc suppression device 100.

Next, each element included in the current limiting circuit AF2 will be described. As the MOSFET M1, an n-type MOSFET is used in the present embodiment. The MOSFET M1 is provided on a path through which the current flows from the AC power supply V1. The capacitor C1 is provided between a drain terminal and a gate terminal of the MOSFET M1. Furthermore, the resistor R1 is provided between the gate terminal and a source terminal of the MOSFET M1. The resistor R1 is provided to set a time for applying a voltage to the gate terminal of the MOSFET M1 together with the capacitor C1. Then, the capacitor C1 and the resistor R1 are connected in series. The Zener diode D1 is provided to discharge charges stored in the capacitor C1 when the contact of the relay RY1 is connected. Furthermore, the Zener diode D1 is provided to protect the gate terminal of the MOSFET M1. The diode D2 suppresses a current caused by a parasitic reverse diode of the MOSFET M2. The current limiting circuit AF2 is reversely biased by the diode D2 when the current is blocked by the relay RY1 in a state where the AC power supply V1 has the negative voltage and is disconnected from the arc suppression device 100.

Subsequently, a function of the arc suppression device 100 will be described. When the relay RY1 is in an on state, the MOSFETs M1 and M2 are in an off state. Therefore, no current flows in the arc suppression device 100.

When the relay RY1 blocks the current in a state where the AC power supply V1 has the negative voltage, a predetermined potential difference is generated between terminals of the relay RY1. The potential difference corresponds to a voltage value of the AC power supply V1 at the time of blocking. The potential difference generated between the terminals of the relay RY1 induces a gate voltage of the MOSFET M2 via the capacitor C4 and turns off the MOSFET M2. When the MOSFET M2 is turned on, a current flows in a direction in which the potential difference between the terminals of the relay RY1 is lowered. That is, when the MOSFET M2 is turned on, the current flows in a direction from a node N5 to a node N1.

When the MOSFET M2 is turned on, the current flows in the direction in which the potential difference between the terminals of the relay RY1 is lowered so as to reduce the potential difference between the terminals of the relay RY1. Therefore, even in a case where an arc generation condition is satisfied when the relay RY1 blocks the current in a state where the AC power supply V1 has the negative voltage, the arc is not generated in the relay RY1.

A voltage between the drain terminal of the source terminal of the MOSFET M2 is within a voltage along a transfer function according to a gate voltage of a FET. When charging of the capacitor C4 proceeds by the potential difference between the terminals of the relay RY1, the gate voltage of the MOSFET M2 is lowered. When the gate voltage of the MOSFET M2 is lowered, the state of the MOSFET M2 shifts to the off state. By shifting the state of the MOSFET M2 to the off state, the current does not flow in the MOSFET M2.

When the relay RY1 blocks the current in a state where the AC power supply V1 has the positive voltage, a predetermined potential difference is generated between the terminals of the relay RY1. The potential difference corresponds to a voltage value of the AC power supply V1 at the time of blocking. The potential difference generated between the terminals of the relay RY1 induces a gate voltage of the MOSFET M1 via the capacitor C1 and turns on the MOSFET M1. When the MOSFET M1 is turned on, a current flows in a direction in which the potential difference between the terminals of the relay RY1 is lowered. That is, when the MOSFET M1 is turned on, the current flows in a direction from the node N1 to the node N5.

When the MOSFET M1 is turned on, the current flows in the direction in which the potential difference between the terminals of the relay RY1 is lowered so as to reduce the potential difference between the terminals of the relay RY1. Therefore, even in a case where the arc generation condition is satisfied when the relay RY1 blocks the current in a state where the AC power supply V1 has the positive voltage, the arc is not generated in the relay RY1.

A voltage between the drain terminal and the source terminal of the MOSFET M1 is within a voltage along the transfer function of the gate voltage of the FET. When charging of the capacitor C1 proceeds by the potential difference generated between the terminals of the relay RY1, the gate voltage of the MOSFET M1 is lowered. When the gate voltage of the MOSFET M1 is lowered, the state of the MOSFET M1 shifts to the off state. By shifting the state of the MOSFET M1 to the off state, the current does not flow in the MOSFET M1.

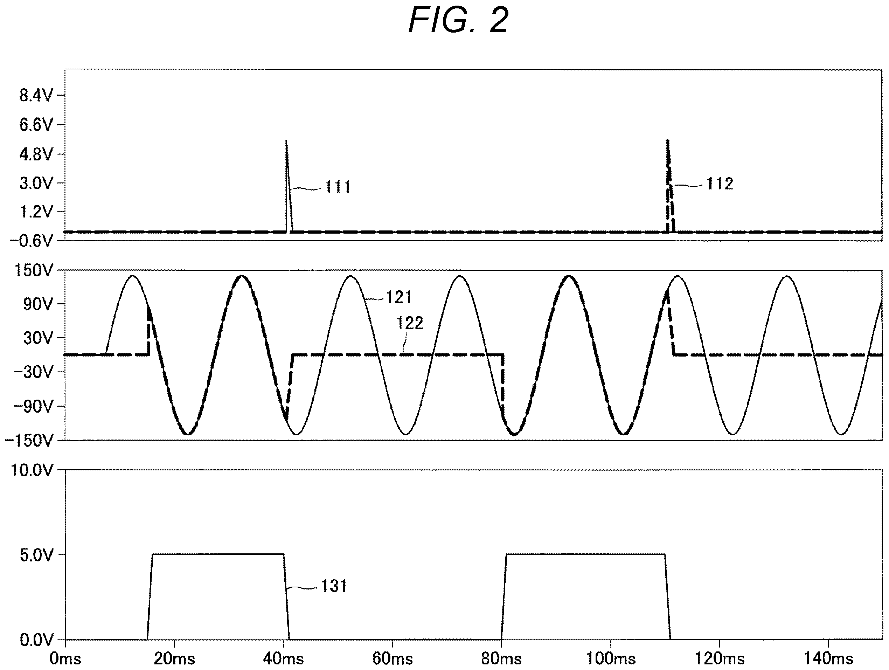

Fig. 2 is an explanatory diagram illustrating temporal transitions of the currents flowing in the MOSFETs M1 and M2 in the arc suppression device 100, the voltage (voltage of node N1 in Fig. 1) and an output voltage Vout (voltage of node N5 in Fig. 1) of the AC power supply V1, and the on/off state of the relay RY1. In Fig. 2, the on/off state of the relay RY1 is illustrated as being replaced with the temporal transition of the voltage of the DC power supply V2. In the present embodiment, when a voltage of 5 V is applied to the relay RY1, the relay RY1 is turned on. In Fig. 2, a reference 111 indicates the temporal transition of the current flowing in the MOSFET M2, a reference 112 indicates the temporal transition of the current flowing in the MOSFET M1, a reference 121 indicates the temporal transition of the voltage of the node N1 in Fig. 1, a reference 122 indicates the temporal transition of the voltage of the node N5 in Fig. 1, and a reference 131 indicates the temporal transition of the voltage of the DC power supply V2.

In a case where the relay RY1 is in the off state, the current from the AC power supply V1 is blocked by the relay RY1 and the arc suppression device 100, and the output voltage Vout is 0 V. When the relay RY1 is turned on, the current from the AC power supply V1 flows through the relay RY1. The voltage of the output voltage Vout changes according to a change in the voltage of the AC power supply V1.

When the state of the relay RY1 is switched from the on state to the off state at a time t1 (for example, 40 ms in Fig. 2) when the voltage of the AC power supply V1 is negative, the output voltage Vout becomes 0 V again. Furthermore, when the state of the relay RY1 is switched from the on state to the off state, the MOSFET M2 is turned on due to the potential difference between the terminals of the relay RY1, and a current flows in a short time. Then, as described above, the gate voltage of the MOSFET M2 is lowered, and eventually, the state of the MOSFET M2 shifts to the off state. By turning off the MOSFET M2 due to the potential difference between the terminals of the relay RY1 in this way, the generation of the arc between the terminals of the relay RY1 can be suppressed.

On the other hand, when the state of the relay RY1 is switched from the on state to the off state at a time t2 (for example, 110 ms in Fig. 2) when the voltage of the AC power supply V1 is positive, the output voltage Vout becomes 0 V again. Furthermore, when the state of the relay RY1 is switched from the on state to the off state, the MOSFET M1 is turned on due to the potential difference between the terminals of the relay RY1, and a current flows in a short time. Then, as described above, the gate voltage of the MOSFET M1 is lowered, and eventually, the state of the MOSFET M1 shifts to the off state. By turning on the MOSFET M1 due to the potential difference between the terminals of the relay RY1 in this way, the generation of the arc between the terminals of the relay RY1 can be suppressed.

In this way, the arc suppression device 100 according to one embodiment of the present disclosure can suppress the generation of the arc at the time when the power supply from the AC power supply V1 is blocked by using the relay RY1. By suppressing the generation of the arc between the contact of the relay RY1, the arc suppression device 100 can prolong the life of the relay RY1.

### (Modification)

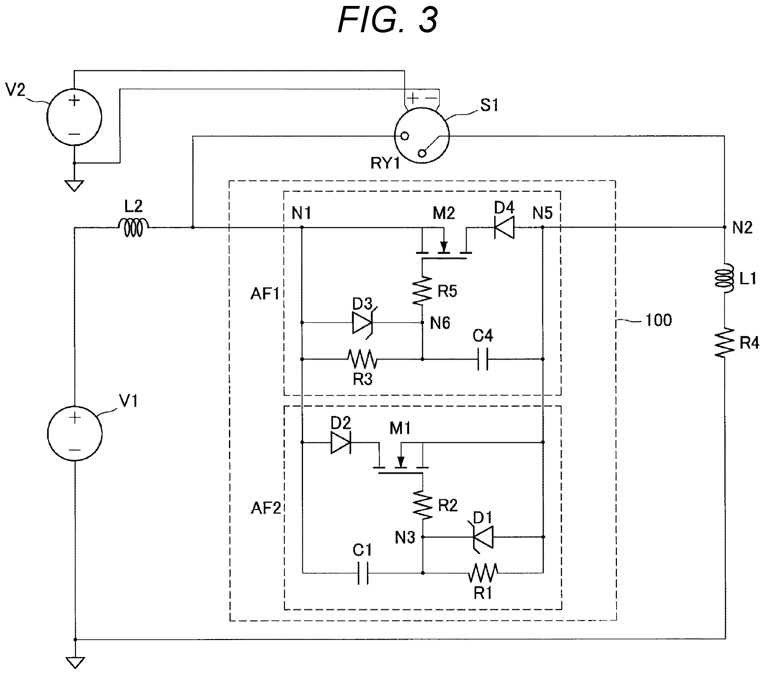

The diodes D4 and D2 respectively provided in the current limiting circuits AF1 and AF2 of the arc suppression device 100 illustrated in Fig. 1 may be provided on drain terminal sides of the MOSFETs M2 and M1. Fig. 3 is an explanatory diagram illustrating an example of the circuit configuration of the arc suppression device according to one embodiment of the present disclosure. The arc suppression device illustrated in Fig. 3 is a device which suppresses arc that may be generated at the time of blocking the AC power.

The arc suppression device 100 illustrated in Fig. 3 has the same circuit configuration as the arc suppression device 100 illustrated in Fig. 1 except that the diodes D4 and D2 are provided on the drain terminal sides of the MOSFETs M2 and M1 in the current limiting circuits AF1 and AF2. Even when the diodes D4 and D2 are respectively provided on the drain terminal sides of the MOSFETs M2 and M1 in this way, similarly, generation of arc when the power supply from the AC power supply V1 is blocked by using the relay RY1 can be suppressed.

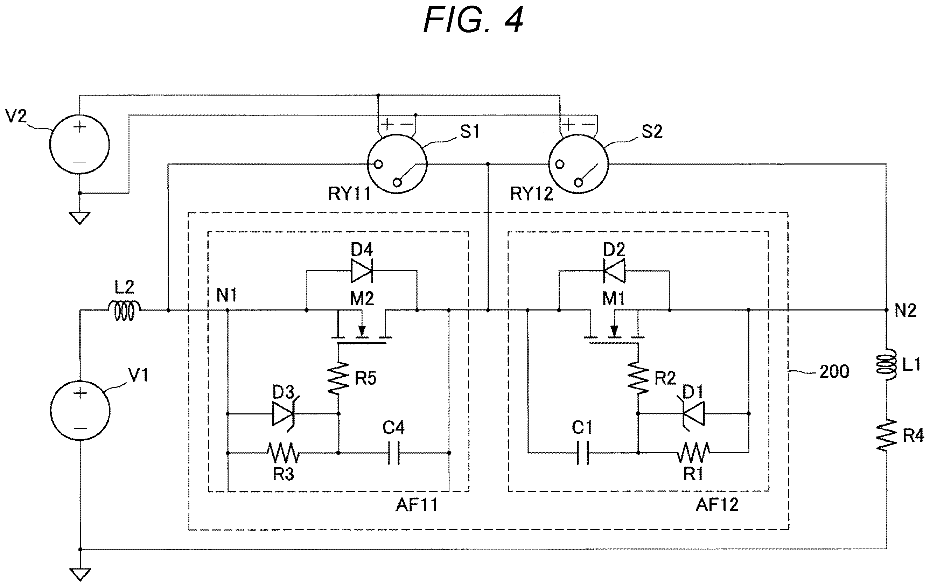

Furthermore, in the arc suppression device 100 illustrated in Fig. 1, the current limiting circuits AF1 and AF2 are provided in parallel. However, the current limiting circuits AF1 and AF2 may be provided in series. Fig. 4 is an explanatory diagram illustrating an example of the circuit configuration of the arc suppression device according to one embodiment of the present disclosure. The arc suppression device illustrated in Fig. 4 is a device which suppresses arc that may is generated at the time of blocking the AC power.

An arc suppression device 200 illustrated in Fig. 4 is a device which suppresses the generation of the arc in relays RY11 and RY12 when the AC power supplied from the AC power supply V1 is blocked by the relays RY11 and RY12. The AC power supply V1 is, for example, a power supply for supplying AC power of 100 V. Furthermore, on/off states of the relays RY11 and RY12 are switched by power from the DC power supply V2. As illustrated in Fig. 4, the arc suppression device 100 is provided in parallel to the relays RY11 and RY12. Furthermore, the arc suppression device 100 includes current limiting circuits AF11 and AF12 provided in series.

The current limiting circuit AF11 has the same circuit configuration as the AF1 of the arc suppression device 100 illustrated in Fig. 1 except that the diode D4 is provided between the source terminal and the drain terminal of the MOSFET M2. Furthermore, the current limiting circuit AF12 has the same circuit configuration as the AF1 of the arc suppression device 100 illustrated in Fig. 1 except that the diode D2 is provided between the source terminal and the drain terminal of the MOSFET M1.

In the arc suppression device 200 illustrated in Fig. 4, when the relays RY11 and RY12 are turned off, the resistor R3 and the capacitor C4 in the current limiting circuit AF11 and the capacitor C1 and the resistor R1 in the current limiting circuit AF12 are connected in series. In other words, since the arc suppression device 200 illustrated in Fig. 4 has large impedance connected to a load (resistor R4), a leakage current caused when the relays RY11 and RY12 are turned off can be reduced.

### <2. Summary>

As described above, according to one embodiment of the present disclosure, an arc suppression device can be provided that can suppress the generation of the arc when the contact of the breaker for switching the supply and the block of the AC power from the AC power supply is separated at the time of blocking an alternating current and prolong a life by preventing deterioration of the contact.

The preferred embodiment of the present disclosure has been described in detail above with reference to the drawings. However, the technical scope of the present disclosure is not limited to the embodiment. It is obvious that a person who has normal knowledge in the technical field of the present disclosure can arrive at various variations and modifications in the scope of the technical ideas described in claims. It is understood that the variations and modifications naturally belong to the technical scope of the present disclosure.

Furthermore, the effects described herein are merely illustrative or exemplary, and are not limited. That is, the technology according to the present disclosure may exhibit the above effects or other effects obvious to those skilled in the art from the description herein instead of the above effects.

Note that the following configuration belongs to the technical scope of the present disclosure.
(1) An arc suppression device including:
   current limiting circuits provided in parallel to a breaker for switching between supply and block of AC power from an AC power supply corresponding to a bidirectional current from the AC power supply in parallel, in which
   each of the current limiting circuits blocks a current from the AC power supply when the AC power from the AC power supply is supplied to a load and blocks the current from the AC power supply after a current that is generated by a potential difference is flowed, the potential difference being caused at the time of blocking when the supply of the AC power from the AC power supply to the load is blocked.
(2) The arc suppression device according to (1), in which
   the current limiting circuit includes a switching element that is turned off when the AC power from the AC power supply is supplied to the load and is turned on due to the potential difference caused at the time of blocking when the supply of the AC power from the AC power supply to the load is blocked, and thereafter, is turned off after a current that is generated by the potential difference is flowed.
(3) The arc suppression device according to (2), in which
   the current limiting circuit includes a capacitive element that raises a gate voltage of the switching element when the supply of the AC power from the AC power supply to the load is blocked.
(4) The arc suppression device according to (3), in which
   the current limiting circuit includes a resistive element that sets a time for applying a voltage to a gate terminal of the switching element together with the capacitive element.
(5) The arc suppression device according to (3) or (4), in which
   the current limiting circuit includes a Zener diode between a source terminal and the gate terminal of the switching element.
(6) An arc suppression device including:
   current limiting circuits provided in parallel to a breaker for switching between supply and block of AC power from an AC power supply corresponding to a bidirectional current from the AC power supply in parallel, in which
   each of the current limiting circuits includes:
      a switching element that is turned off when the AC power from the AC power supply is supplied to a load and is turned on due to a potential difference caused at the time of blocking when the supply of the AC power from the AC power supply to the load is blocked, and thereafter, is turned off after a current that is generated by the potential difference is flowed; and
      a capacitive element that raises a gate voltage of the switching element when the supply of the AC power from the AC power supply to the load is blocked.
(7) The arc suppression device according to (6), in which
   the current limiting circuit includes a resistive element that sets a time for applying a voltage to a gate terminal of the switching element together with the capacitive element.
(8) The arc suppression device according to (6) or (7), in which
   the current limiting circuit includes a Zener diode between a source terminal and the gate terminal of the switching element.
(9) An arc suppression device including:
   current limiting circuits provided in parallel to a breaker for switching between supply and block of AC power from an AC power supply corresponding to a bidirectional current from the AC power supply in series, in which
   each of the current limiting circuits blocks a current from the AC power supply when the AC power from the AC power supply is supplied to a load and blocks the current from the AC power supply after a current that is generated by a potential difference is flowed, the potential difference being caused at the time of blocking when the supply of the AC power from the AC power supply to the load is blocked.
(10) The arc suppression device according to (9), in which
   the current limiting circuit includes a switching element that is turned off when the AC power from the AC power supply is supplied to the load and is turned on due to the potential difference caused at the time of blocking when the supply of the AC power from the AC power supply to the load is blocked, and thereafter, is turned off after a current that is generated by the potential difference is flowed.
(11) The arc suppression device according to (10), in which
   the current limiting circuit includes a capacitive element that raises a gate voltage of the switching element when the supply of the AC power from the AC power supply to the load is blocked.
(12) The arc suppression device according to (11), in which
   the current limiting circuit includes a resistive element that sets a time for applying a voltage to a gate terminal of the switching element together with the capacitive element.
(13) The arc suppression device according to (11) or (12), in which
   the current limiting circuit includes a Zener diode between a source terminal and the gate terminal of the switching element.
(14) An arc suppression device including:
   current limiting circuits provided in parallel to a breaker for switching between supply and block of AC power from an AC power supply corresponding to a bidirectional current from the AC power supply in series, in which
   each of the current limiting circuits includes:
      a switching element that is turned off when the AC power from the AC power supply is supplied to a load and is turned on due to a potential difference caused at the time of blocking when the supply of the AC power from the AC power supply to the load is blocked, and thereafter, is turned off after a current that is generated by the potential difference is flowed; and
      a capacitive element that raises a gate voltage of the switching element when the supply of the AC power from the AC power supply to the load is blocked.
(15) The arc suppression device according to (14), in which
   the current limiting circuit includes a resistive element that sets a time for applying a voltage to a gate terminal of the switching element together with the capacitive element.
(16) The arc suppression device according to (15), in which
   the current limiting circuit includes a Zener diode between a source terminal and the gate terminal of the switching element.

### REFERENCE SIGNS LIST

- 100, 200: Arc suppression device
- AF1, AF2, AF11, AF12: Current limiting circuit

## Claims

1. An arc suppression device comprising:
current limiting circuits provided in parallel to a breaker for switching between supply and block of AC power from an AC power supply corresponding to a bidirectional current from the AC power supply in parallel, wherein
each of the current limiting circuits blocks a current from the AC power supply when the AC power from the AC power supply is supplied to a load and blocks the current from the AC power supply after a current that is generated by a potential difference is flowed, the potential difference being caused at a time of blocking when the supply of the AC power from the AC power supply to the load is blocked.

2. The arc suppression device according to claim 1, wherein
the current limiting circuit includes a switching element that is turned off when the AC power from the AC power supply is supplied to the load and is turned on due to the potential difference caused at the time of blocking when the supply of the AC power from the AC power supply to the load is blocked, and thereafter, is turned off after a current that is generated by the potential difference is flowed.

3. The arc suppression device according to claim 2, wherein
the current limiting circuit includes a capacitive element that raises a gate voltage of the switching element when the supply of the AC power from the AC power supply to the load is blocked.

4. The arc suppression device according to claim 3, wherein
the current limiting circuit includes a resistive element that sets a time for applying a voltage to a gate terminal of the switching element together with the capacitive element.

5. The arc suppression device according to claim 3, wherein
the current limiting circuit includes a Zener diode between a source terminal and a gate terminal of the switching element.

6. An arc suppression device comprising:
current limiting circuits provided in parallel to a breaker for switching between supply and block of AC power from an AC power supply corresponding to a bidirectional current from the AC power supply in parallel, wherein
each of the current limiting circuits includes:
a switching element that is turned off when the AC power from the AC power supply is supplied to a load and is turned on due to a potential difference caused at a time of blocking when the supply of the AC power from the AC power supply to the load is blocked, and thereafter, is turned off after a current that is generated by the potential difference is flowed; and
a capacitive element that raises a gate voltage of the switching element when the supply of the AC power from the AC power supply to the load is blocked.

7. The arc suppression device according to claim 6, wherein
the current limiting circuit includes a resistive element that sets a time for applying a voltage to a gate terminal of the switching element together with the capacitive element.

8. The arc suppression device according to claim 6, wherein
the current limiting circuit includes a Zener diode between a source terminal and a gate terminal of the switching element.

9. An arc suppression device comprising:
current limiting circuits provided in parallel to a breaker for switching between supply and block of AC power from an AC power supply corresponding to a bidirectional current from the AC power supply in series, wherein
each of the current limiting circuits blocks a current from the AC power supply when the AC power from the AC power supply is supplied to a load and blocks the current from the AC power supply after a current that is generated by a potential difference is flowed, the potential difference being caused at a time of blocking when the supply of the AC power from the AC power supply to the load is blocked.

10. The arc suppression device according to claim 9, wherein
the current limiting circuit includes a switching element that is turned off when the AC power from the AC power supply is supplied to the load and is turned on due to the potential difference caused at the time of blocking when the supply of the AC power from the AC power supply to the load is blocked, and thereafter, is turned off after a current that is generated by the potential difference is flowed.

11. The arc suppression device according to claim 10, wherein
the current limiting circuit includes a capacitive element that raises a gate voltage of the switching element when the supply of the AC power from the AC power supply to the load is blocked.

12. The arc suppression device according to claim 11, wherein
the current limiting circuit includes a resistive element that sets a time for applying a voltage to a gate terminal of the switching element together with the capacitive element.

13. The arc suppression device according to claim 11, wherein
the current limiting circuit includes a Zener diode between a source terminal and a gate terminal of the switching element.

14. An arc suppression device comprising:
current limiting circuits provided in parallel to a breaker for switching between supply and block of AC power from an AC power supply corresponding to a bidirectional current from the AC power supply in series, wherein
each of the current limiting circuits includes:
a switching element that is turned off when the AC power from the AC power supply is supplied to a load and is turned on due to a potential difference caused at a time of blocking when the supply of the AC power from the AC power supply to the load is blocked, and thereafter, is turned off after a current that is generated by the potential difference is flowed; and
a capacitive element that raises a gate voltage of the switching element when the supply of the AC power from the AC power supply to the load is blocked.

15. The arc suppression device according to claim 14, wherein
the current limiting circuit includes a resistive element that sets a time for applying a voltage to a gate terminal of the switching element together with the capacitive element.

16. The arc suppression device according to claim 15, wherein
the current limiting circuit includes a Zener diode between a source terminal and the gate terminal of the switching element.
